# EUROPEAN PATENT APPLICATION

(11) **EP 1 935 301 A1**
(43) Date of publication of application: **25.06.2008**
(21) Application number: 06026483.5
(22) Date of filing: 20.12.2006
(51) Int. Cl.: A47J 42/46, A47J 42/06

(54) **Electric seasoning mill**

(71) Applicant: Duo Yeu Metal Co., Ltd., Tainan Hsien (TW)
(72) Inventor: Wang, Chih-Hung, Tainan Hsien (TW)
(74) Representative: Kador, Ulrich

(57) **Abstract**

An electric seasoning mill includes a main part, a motor, a power source, first and second grinding mechanisms, and first and second transmission shafts; the main part has first and second holding rooms at two ends; the motor is housed in the main part with first and second output shafts projecting towards two ends of the main part; the output shafts can rotate in concert in either a first or a second direction; the grinding mechanisms are respectively adjacent to the holding rooms, and each has an inner rotatable toothed part; each transmission shaft operatively couples a corresponding output shaft and a corresponding inner rotatable toothed part; a tilting device is provide, which will automatically actuate the motor to rotate the output shafts in one of the first and the second directions when the main part is tilted so that one of the holding rooms is below the other.

## Description

### BACKGROUND OF THE INVENTION

### 1. Field of the invention

The present invention relates to an electric seasoning mill, more particularly one, which has two opposed ends respectively having first and second holding rooms each containing a respective kind of seasoning, two grinding mechanisms each housed in a respective holding room, and a sloping contact device so that only a currently lower one of the grinding mechanisms will be actuated to grind the seasoning when the electric seasoning mill is held in a tilted position.

### 2. Brief Description of the Prior Art

In order to preserve the original taste of various kinds of seasonings, seasonings are usually stored in larger particle sizes, and ground and directly dispensed with seasoning grinders when people want to use them in cooking or tasting.

A currently existing manual seasoning mill structure includes a hollow main body, a rotary operating member connected to an upper end of the hollow main body, a transmission shaft held in the main body and turnable together with the rotary operating member, an inner toothed part joined to a lower end of the transmission shaft, and an outer toothed part positioned around the inner toothed part and secured to an inner side of the main part. Seasonings are contained in the hollow main body. Thus, the inner toothed part will turn relative to the outer toothed part to grind seasonings together with the outer toothed part when the operating member is rotated.

However, it requires unwarranted time and labor to use the manual seasoning mill, and it is difficult for those people who can't use their hands very dexterously to operate such seasoning mills smoothly. Further, this prior art seasoning mill can contain only one kind of seasoning or one kind of seasoning combination instead of two. In the present markets, there is a variety of electric seasoning grinders as well, which include a motor, a grinding mechanism, a transmission shaft connected to both the motor and the grinding mechanism, and a switch for turning on/off the motor. However, these grinders are not very practical because they can contain only one kind of seasoning or one kind of seasoning combination.

Although there are several different dual-use seasoning grinders available to consumers which have two separate rooms for containing two kinds of seasonings, and although these can grind the two kinds of seasonings separately, they are hand-operated and not convenient to use. Therefore, an improvement on a seasoning mill is made according to the present invention to overcome the above-mentioned problems, thus allowing users to use more conveniently.

### SUMMARY OF THE INVENTION

An electric seasoning mill of the present invention includes a main part, a motor, a power supply device for supplying power to the motor, first and second grinding mechanisms, and first and second transmission shafts. The main part has first and second opposed ends, a first holding room adjacent to the first end, and a second holding room adjacent to the second end. The motor is housed in the main part between the first and the second ends. The motor has a first output shaft projecting towards the first end of the main part, and a second output shaft projecting towards the second end of the main part. The first and the second output shafts can rotate in concert in a first (forward) direction relative to the main part, and can rotate in concert in a second (reverse) direction relative to the main part. The first and second grinding mechanisms are respectively adjacent to the first and second holding rooms, and each has a stationary outer toothed part and rotary inner toothed part. The first transmission shaft operatively couples the first output shaft and the rotary inner toothed part of the first grinding mechanism, and the second transmission shaft operatively couples the second output shaft and the rotary inner toothed part of the second grinding mechanism. Furthermore, a tilting device is included for automatically actuating the motor to rotate the first and second output shafts in the first direction upon a tilting of the main part so that the first holding room is below the second holding room; thus, the first grinding mechanism is actuated to grind the seasoning held in the first holding room. And, the tilting device will automatically actuate the motor to rotate the first and second output shafts in the second direction upon a tilting of the main part so that the second holding room is below the first holding room.

### BRIEF DESCRIPTION OF THE DRAWINGS

The present invention will be better understood by referring to the accompanying drawings, wherein:
Fig. 1 is an exploded perspective view of the present invention,
Fig. 2 is a perspective sectional view of the present invention,
Fig. 3 is a sectional view of the present invention (1),
Fig. 4 is a sectional view of the present invention (2),
Fig. 5 is a view of the control switch assembly in operation (1),
Fig. 6 is a simplified view of the control switch assembly in operation (1),

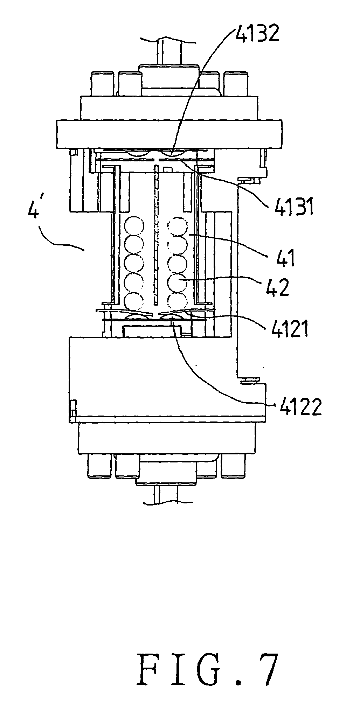

Fig. 7 is a view of the control switch assembly in operation (2),
Fig. 8 is a simplified view of the control switch assembly in operation (2),

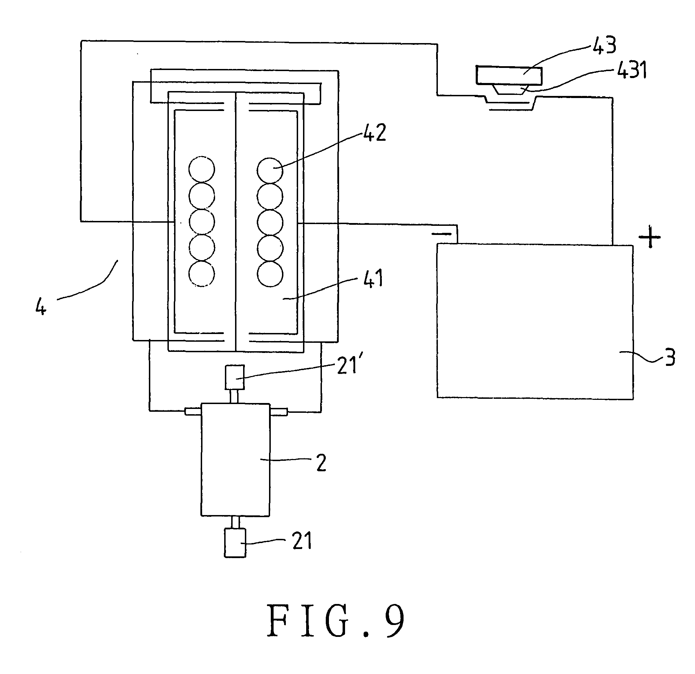

Fig. 9 is a simplified circuit diagram of the present invention,
Fig. 10 is a view of another embodiment of the present invention in operation (1),
Fig. 11 is a view of another embodiment of the present invention in operation (2),
Fig. 12 is a view of the locking ring in use (1), and
Fig. 13 is a view of the locking ring in use (2).

### DETAILED DESCRIPTION OF THE PREFERRED EMBODIMENTS

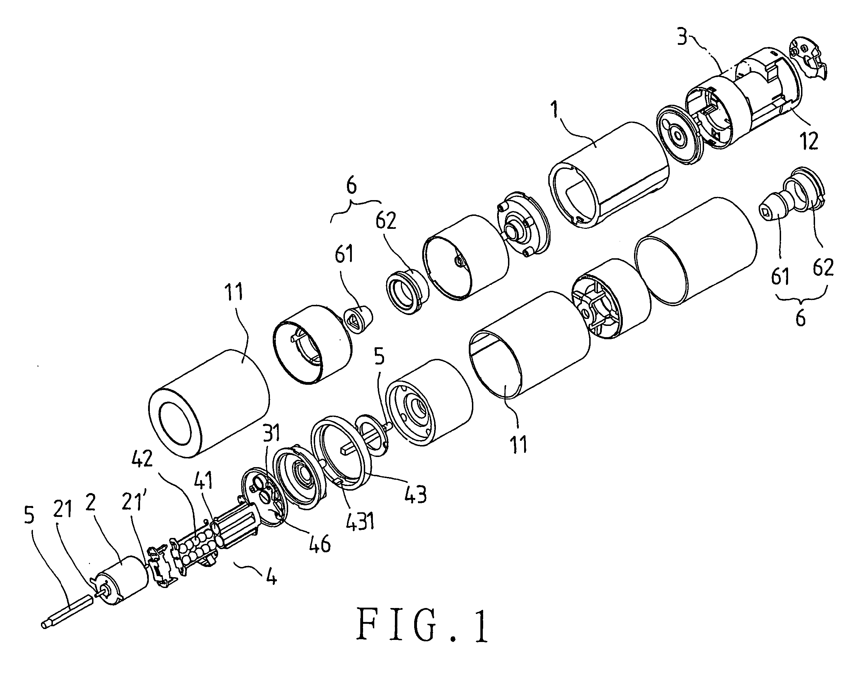

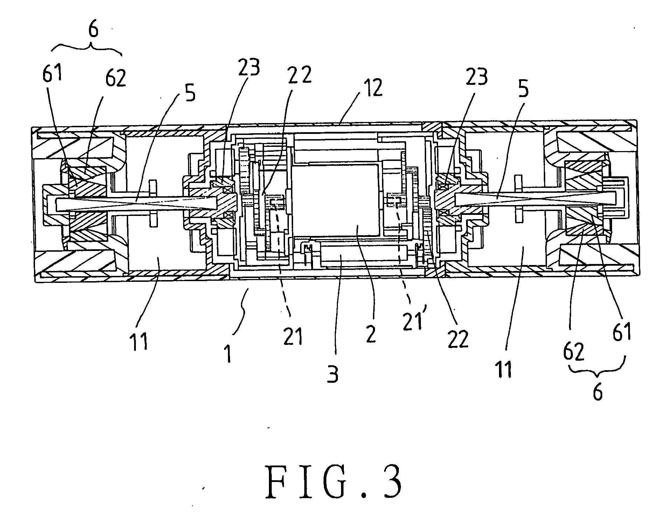

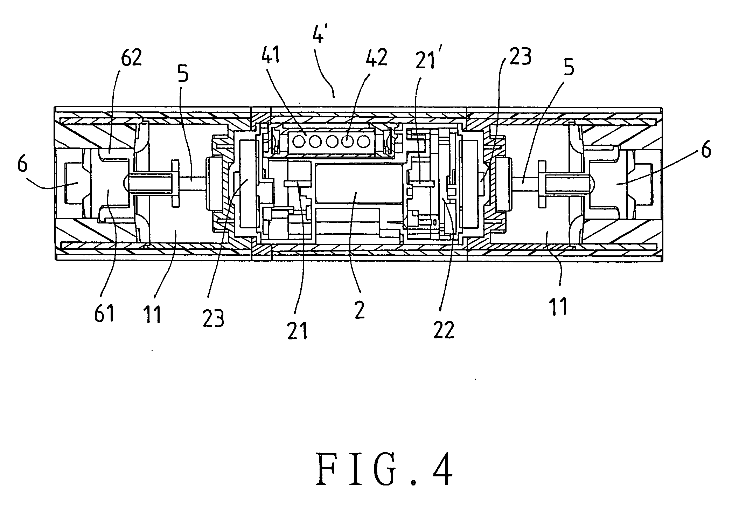

Referring to Figs. 1 to 4, a first preferred embodiment of an electric seasoning mill of the present invention includes a main part 1, a motor 2, a power source 3, a control switch 4, two transmission shafts 5, and first and second grinding mechanisms 6.

The main part 1 has first and second holding rooms 11 at two ends thereof, each provided for containing a kind of seasoning/seasoning combination. The main part 1 further has a connection portion 12 between the first and the second holding rooms 11 thereof.

The motor 2 is fitted to the connecting portion 12 of the main part 1. The motor 2 has first and second output shafts 21 and 21' sticking from two ends thereof, which can rotate in either of a forward direction and a reverse direction, and which will always rotate in the same direction when the motor 2 is powered. A reduction gear assembly 22 is connected to each of the first and the second output shafts 21 and 21'. And, each of the reduction gear assemblies 22 is connected to a single-direction ratchet wheel 23 at an output end thereof.

The transmission shafts 5 are held in the first and the second holding rooms 11 of the main part 1 respectively, and each connected to one corresponding said single-direction ratchet wheel 23 at one end. Therefore, the transmission shaft 5 held in the first holding room 11 will be rotated by the corresponding single-direction ratchet wheel 23 only when the output shafts 21 and 21' of the motor 2 are rotating in the forward direction; this single-direction ratchet wheel 23 won't cause rotation of this (first) transmission shaft 5 when the first output shaft 21 is rotating in the reverse direction. And, the transmission shaft 5 held in the second holding room 11 will be rotated together with the corresponding single-direction ratchet wheel 23 only when the output shafts 21 and 21' are rotating in the reverse direction; this single-direction ratchet wheel 23 can't cause rotation of this (second) transmission shaft 5 when the second output shaft 21' is rotating in the forward direction.

The power source 3 is fitted in the connecting portion 12 of the main part 1 for providing electric power to the motor 2. The control switch 4 is also fitted in the connecting portion 12 of the main part 1 for controlling electric power from the power source 3 to the motor 2 as well as controlling the rotational direction of the first and the second output shafts 21 and 21'; in other words, the motor 2 can be switched in order for the output shafts 21 and 21' to rotate in a forward direction or a reverse one.

The control switch 4 can be a tilting contact device 4', which includes a tunnel 41, which can have a curved shape or a folded shape with higher and lower portions. The tunnel 41 includes a middle lower portion 411, and first and second higher portions 412 and 413 on two sides of the middle lower portion 411. The control switch 4 further includes at least one movable rolling members 42 received in the tunnel 41, first and second contact points 4121 and 4122 in the first higher portion 412 of the tunnel 41, and third and fourth contact points 4131 and 4132 in the second higher portion 413 of the tunnel 41; the first contact point 4121 is off (not in touch with) the second contact point 4122 while the third contact point 4131 is off the fourth contact point 4132. The rolling members 42 can be spherical or non-spherical, and they have to be able to roll or move; there are five rolling members 42, which are spherical, in the present preferred embodiment.

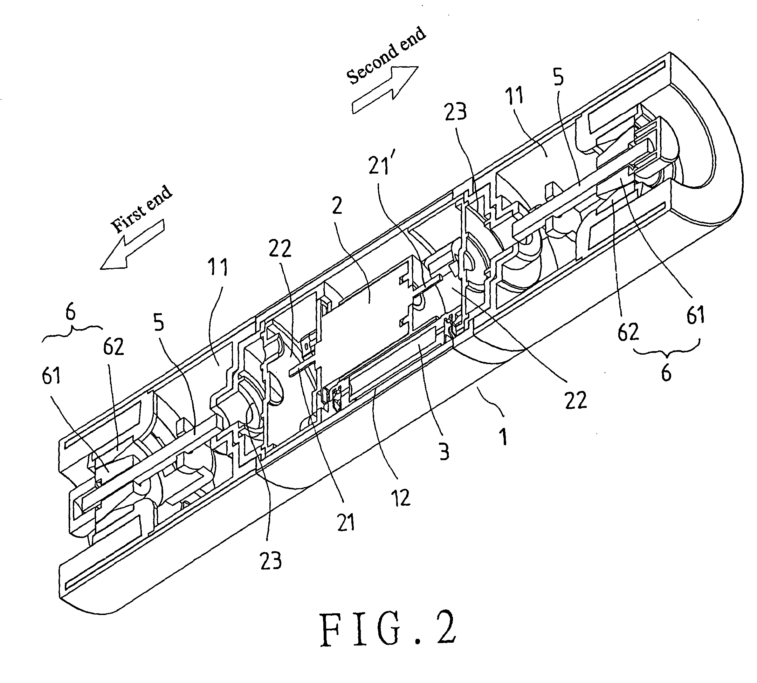

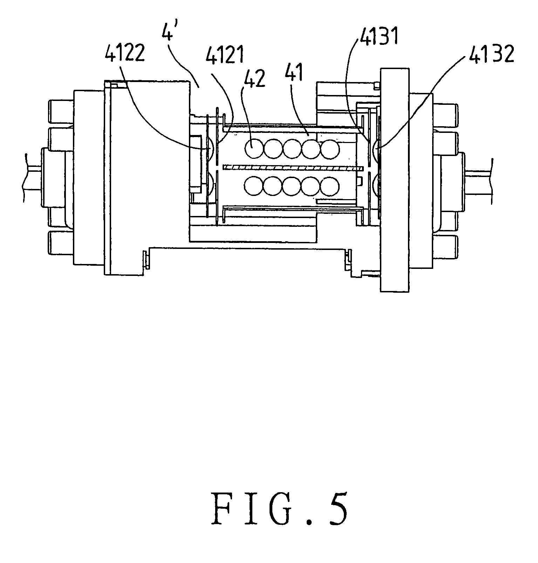

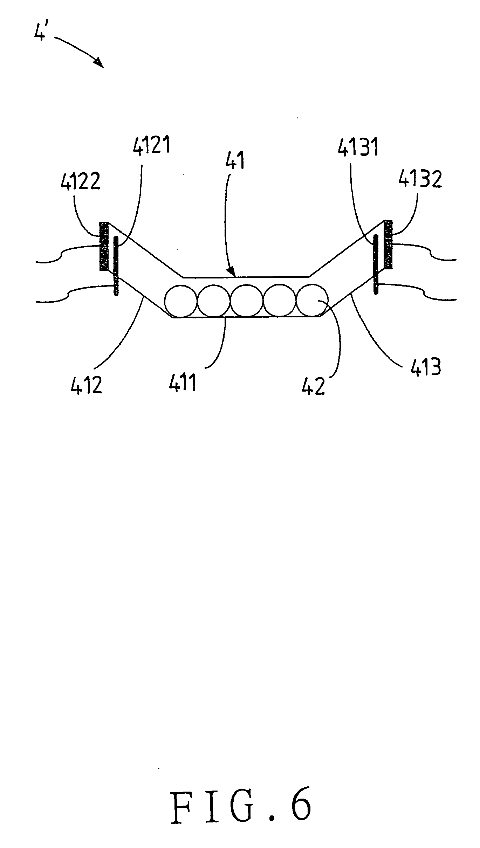

Therefore, when the main part 1 is in a horizontal position with the tilting contact device 4' being in a lying position and with the first and second holding rooms 11 being at the same height, as shown in Figs. 2, 5 and 6, the rolling members 42 will be in the middle lower portion 411 of the tunnel 41 without being in touch with the contact points 4121, 4122, 4131 or 4132. Consequently, the control switch 4 is off, and the motor 2 isn't powered.

The first and the second grinding mechanisms 6 are positioned in the first and the second holding rooms 11 of the main part 1 respectively, and they are near to exits of the corresponding holding rooms 11. Each of the grinding mechanisms 6 includes an inner rotary member 61 connected to a corresponding said transmission shaft 5, and an out stationary member 62 positioned around the inner rotary member 61; the inner rotary member 61 has an interior part having teeth (not shown) extending outwardly therefrom, and the outer stationary member 62 has an outer part having teeth extending inwardly therefrom; each outer part is positioned around a respective interior part, and the teeth extending inwardly from each outer part have a configuration complementary to a configuration of the teeth extending outwardly from a respective interior part.

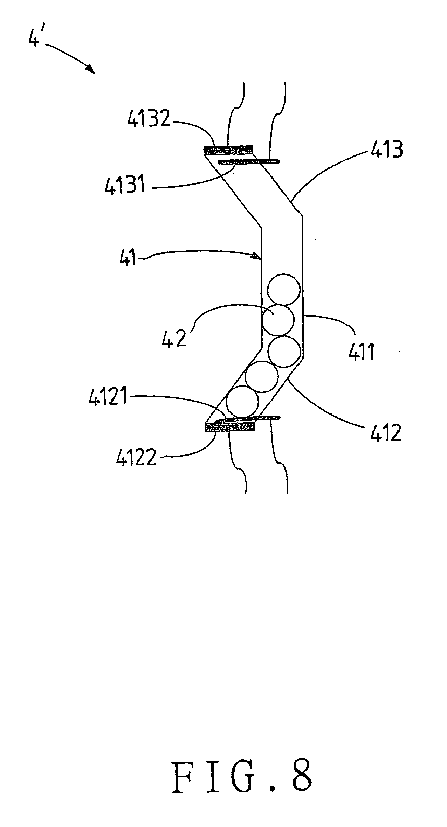

When the main part 1 is in a vertical position with the second holding room 11 being above the first holding room 11, the rolling members 42 will move to the first higher portion 412 of the tunnel 41 owing to gravity, and force the first contact point 4121 into contact with the second contact point 4122 so as to close a circuit, as shown in Fig. 8. Consequently, the motor 2 is powered by the power source 3 in order for the first and the second output shafts 21 and 21' to rotate in the forward direction.

When the main part 1 is in a vertical position with the first holding room 11 being above the second holding room 11, the rolling members 42 will move to the second higher portion 413 of the tunnel 41 owing to gravity, and force the third contact point 4131 into contact with the fourth contact point 4132 so as to close a circuit. Consequently, the motor 2 is powered by the power source 3 in order for the first and the second output shafts 21 and 21' to rotate in the reverse direction.

Therefore, when the main part 1 is in a vertical position with the second holding room 11 being above the first holding room 11, the output shafts 21 and 21' of the motor 2 will rotate in the forward direction, and the first grinding mechanism 6 (currently in the lowermost position) will function to grind the seasoning/seasoning combination held in the first holding room 11 of the main part 1, with the inner rotary member 61 thereof rotating relative to the corresponding outer stationary member 62; at the same time, a currently higher one of the transmission shafts 5 and the inner rotary member 61 of the second grinding mechanism 6 (currently in the uppermost position) won't be rotating relative to the corresponding outer stationary member 62; in other words, the second grinding mechanism 6 (currently in the uppermost position) won't be working.

Furthermore, when the main part 1 is in a vertical position with the first holding room 11 being above the second holding room 11, the output shafts 21 and 21' of the motor 2 will rotate in the reverse direction, and the second grinding mechanism 6 (currently in the lowermost position) will function to grind the seasoning/seasoning combination held in the second holding room 11 of the main part 1, with the inner rotary member 61 thereof rotating relative to the corresponding outer stationary member 62; at the same time, a currently higher one of the transmission shafts 5 and the inner rotary member 61 of the first grinding mechanism 6 (currently in the uppermost position) won't be rotating relative to the corresponding outer stationary member 62; in other words, the first grinding mechanism 6 (currently in the uppermost position) won't be working.

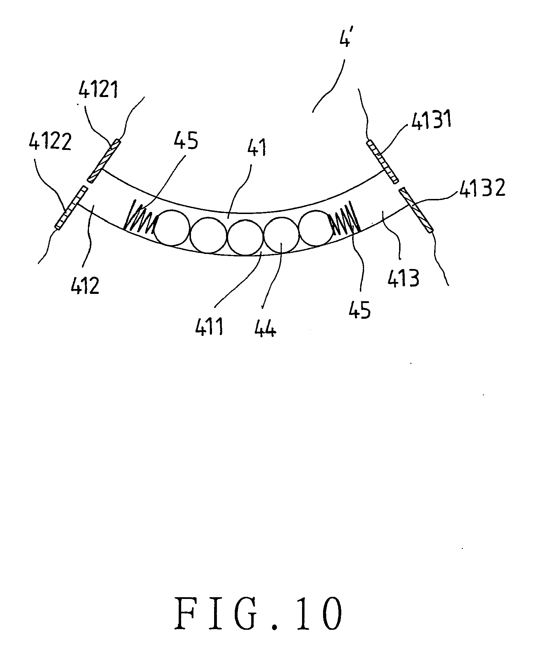

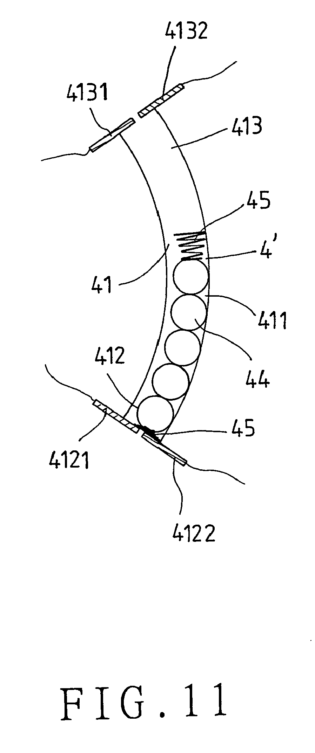

Referring to Figs. 10 and 11, a second preferred embodiment of an electric seasoning mill of the invention is provided, which includes a tilting contact device 4' different from that of the first preferred embodiment. The present tilting contact device 4' includes a tunnel 41, which can have a curved shape or a folded shape with higher and lower portions. The tunnel 41 includes a middle lower portion 411, and first and second higher portions 412 and 413 on two sides of the middle lower portion 411. The control switch 4 further includes at least one movable conducting members 44 received in the tunnel 41, first and second contact points 4121 and 4122 in the first higher portion 412 of the tunnel 41, third and fourth contact points 4131 and 4132 in the second higher portion 413 of the tunnel 41, and first and second conducting elastic elements 45; the first and the second contact points 4121 and 4122 are parallel to each other without being in touch; the third and the fourth contact points 4131 and 4132 are parallel to each other without being in touch. The movable conducting members 44 can be spherical or non-spherical, and they have to be able to roll or move; there are five spherical movable conducting members 44 in the present preferred embodiment. The first conducting elastic element 45 is joined to a front one of the movable conducting members 44 while the second conducting elastic element 45 is joined to a rearmost one of the movable conducting members 44.

Therefore, when the main part 1 is in a horizontal position with the first and second holding rooms 11 being at the same height, the movable conducting members 44 will be in the middle lower portion 411 of the tunnel 41 without being in touch with the contact points 4121, 4122, 4131 or 4132. Consequently, the control switch 4 is off, and the motor 2 isn't powered.

When the main part 1 is in a vertical position with the second holding room 11 being above the first holding room 11, the movable conducting members 44 will move to the first higher portion 412 of the tunnel 41 owing to gravity, and the first conducting elastic element 45 will be in touch with both the first and the second contact points 4121 and 4122 so as to close a circuit, as shown in Fig. 11. Consequently, the motor 2 is powered by the power source 3 in order for the first and the second output shafts 21 and 21' to rotate in the forward direction.

Furthermore, when the main part 1 is in a vertical position with the first holding room 11 being above the second holding room 11, the movable conducting members 44 will be in the second higher portion 413 of the tunnel 41 owing to gravity, and the second conducting elastic element 45 will be in touch with the third and the fourth contact points 4131 and 4132 so as to close a circuit. Consequently, the motor 2 is powered by the power source 3 in order for the first and the second output shafts 21 and 21' to rotate in the reverse direction.

Therefore, when the main part 1 is in a vertical position with the second holding room 11 being above the first holding room 11, the output shafts 21 and 21' of the motor 2 will rotate in the forward direction, and the first grinding mechanism 6 (currently in the lowermost position) will function to grind the seasoning/seasoning combination; at the same time, the second grinding mechanism 6 (currently in the uppermost position) won't be working.

Furthermore, when the main part 1 is in a vertical position with the first holding room 11 being above the second holding room 11, the output shafts 21 and 21' of the motor 2 will rotate in the reverse direction, and the second grinding mechanism 6 (currently in the lowermost position) will function to grind the seasoning/seasoning combination; at the same time, the first grinding mechanism 6 (currently in the uppermost position) won't be working.

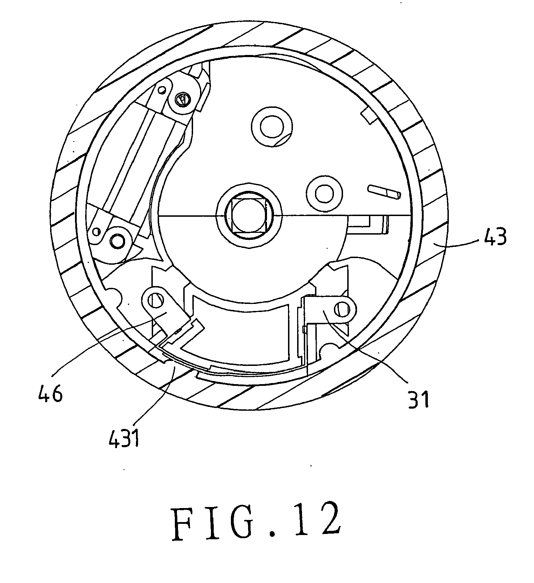

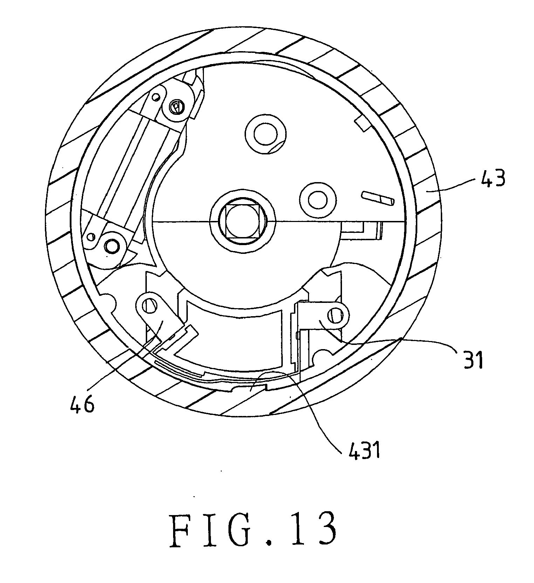

Referring to Figs. 12 and 13, each of the above-mentioned control switches 4 further has a locking ring 43, which has a protruding wing portion 431 thereon, and which can be rotated to either a connecting position or a disconnecting position; when the locking ring 43 is in the connecting position, the protruding wing portion 431 will force a connecting end 31 of the power source 3 into contact with a connecting end 46 of the control switch 4, and in turn the electric seasoning mill will be activated when it is held in a vertical position. Furthermore, when the locking ring 43 is in the disconnecting position, the protruding wing portion 431 won't force the connecting end 31 into contact with the connecting end 46, and in turn the electric seasoning mill can't be activated no matter what position the electric seasoning mill is held in, thus preventing the electric seasoning mill from being accidentally activated when it is being moved, carried or transported.

From the above description, it can be seen that the electric seasoning mill of the present invention is relatively convenient to use; the electric seasoning mill includes a main part with two holding rooms each containing a kind of seasoning/seasoning combination, two grinding mechanisms held in respective ones of the holding rooms, single-direction ratchet wheels, and a control switch such that only a currently lower one of the grinding mechanisms will be actuated to grind the seasoning/seasoning combination when the electric seasoning mill is held in a substantially vertical position. Furthermore, the electric seasoning mill is safe to use because it includes the locking ring, which can be turned to a disconnecting position for preventing the mill from being accidentally activated when the mill is being moved, carried or transported.

## Claims

1. An electric seasoning mill, comprising
a main part 1, the main part 1 having first and second ends at two ends, the main part 1 having first and second holding rooms 11 adjacent to the first and the second ends respectively;
a motor 2 positioned between the first and the second ends of the main part 1; the motor 2 having a first output shaft 21 projecting towards the first end of the main part 1; the motor 2 having a second output shaft 21' projecting towards the second end of the main part 1; the first and the second output shafts 21 and 21' being capable of rotating in concert in a first direction relative to the main part 1; the first and the second output shafts 21and 21' being capable of rotating in concert in a second direction relative to the main part 1;
a power source 3 for providing electric power to the motor 2;
a control switch 4 for actuating the first and second output shafts 21and 21' of the motor 2 to rotate in the first and second holding rooms 11, respectively; the first and the second output shafts 21 and 21' of the motor 2 being going to rotate in a first direction when the main part 1 is held in such a position that the first holding room 11 is lower than the second holding room 11 thereof; the first and the second output shafts 21 and 21' being going to rotate in a second direction when the main part 1 is held in such a position that the second holding room 11 is lower than the first holding room 11 thereof;
first and second grinding mechanisms 6, the first and the second grinding mechanisms 6 being positioned adjacent to the first and the second holding rooms 11 of the main part 1 respectively; each of the grinding mechanisms 6 including an inner rotary member 61, and an out stationary member 62 positioned around the inner rotary member 61;
a first transmission shaft 5 connected to the first output shaft 21 of the motor 2 and the inner rotary member 61 of the first grinding mechanism 6; and
a second transmission shaft 5 connected to the second output shaft 21' and the inner rotary member 61 of the second grinding mechanism 6.

2. The electric seasoning mill as recited in claim 1, wherein the control switch 4 is a tilting contact device 4', which includes a tunnel 41 with higher and lower portions; the tunnel 41 including a middle lower portion 411, and first and second higher portions 412 and 413 on two sides of the middle lower portion 411; at least one movable rolling member 42 being received in the tunnel 41; first and second contact points 4121 and 4131 being arranged off each other in the first higher portion 412 of the tunnel 41; third and fourth contact points 4131 and 4132 being arranged off each other in the second higher portion 413 of the tunnel 41;
when the main part 1 is tilted such that the first holding room 11 is lower than the second holding room 11 thereof, said at least one movable rolling member 42 being going to move so as to force the first and the second contact points 4121 and 4122 into contact with each other; when the main part 1 is tilted such that the second holding room 11 is lower than the first holding room 11 thereof, said at least one movable rolling member 42 being going to move so as to force the third and the fourth contact points 4131 and 4132 into contact with each other; when the first and the second contact points 4121 and 4122 are in contact with each other, a first circuit being going to be completed, and the first output shaft 21 of the motor 2 being going to rotate in said first direction; when the third and the fourth contact points 4131 and 4132 are in contact with each other, a second circuit being going to be completed, and the second output shaft 21' of the motor 2 being going to rotate in said second direction.

3. The electric seasoning mill as recited in claim 2, wherein a first single-direction ratchet wheel 23 is connected to the first output shaft 21 and the first transmission shaft 5, and a second single-direction ratchet wheel 23 is connected to the second output shaft 21' and the second transmission shaft 5; the first single-direction ratchet wheel 23 being going to cause rotation of the first transmission shaft 5 when the first output shaft 21 is rotating in said first direction; the first single-direction ratchet wheel 23 being not going to cause rotation of the first transmission shaft 5 when the first output shaft 21 is rotating in said second direction; the second single-direction ratchet wheel 23 being going to cause rotation of the second transmission shaft 5 when the second output shaft 21' is rotating in said second direction; the second single-direction ratchet wheel 23 being not going to cause rotation of the second transmission shaft 5 when the second output shaft 21' is rotating in said first direction.

4. The electric seasoning mill as recited in claim 3, wherein a first reduction gear assembly 22 is connected to the first single-direction ratchet wheel 23 as well as at least one of the first output shaft 21 and the first transmission shaft 5 in order for rotation speed of the first transmission shaft 5 to decrease relative to rotation speed of the first output shaft 21, and a second reduction gear assembly 22 is connected to the second single-direction ratchet wheel 23 as well as at least one of the second output shaft 21' and the second transmission shaft 5 in order for rotation speed of the second transmission shaft 5 to decrease relative to rotation speed of the second output shaft 21'.

5. The electric seasoning mill as recited in claim 1, wherein a first single-direction ratchet wheel 23 is connected to the first output shaft 21 and the first transmission shaft 5, and a second single-direction ratchet wheel 23 is connected to the second output shaft 21' and the second transmission shaft 5; the first single-direction ratchet wheel 23 being going to rotate the first transmission shaft 5 when the first output shaft 21 is rotating in said first direction; the first single-direction ratchet wheel 23 being not going to rotate the first transmission shaft 5 when the first output shaft 21 is rotating in said second direction; the second single-direction ratchet wheel 23 being going to rotate the second transmission shaft 5 when the second output shaft 21' is rotating in said second direction; the second single-direction ratchet wheel 23 being not going to rotate the second transmission shaft 5 when the second output shaft 21' is rotating in said first direction.

6. The electric seasoning mill as recited in claim 5, wherein a first reduction gear assembly 22 is connected to the first single-direction ratchet wheel 23 as well as at least one of the first output shaft 21 and the first transmission shaft 5 for decreasing rotation speed of the first transmission shaft 5 relative to rotation speed of the first output shaft 21, and a second reduction gear assembly 22 is connected to the second single-direction ratchet wheel 23 as well as at least one of the second output shaft 21' and the second transmission shaft 5 for decreasing rotation speed of the second transmission shaft 5 relative to rotation speed of the second output shaft 21'.

7. The electric seasoning mill as recited in claim 1, wherein the first holding room 11 has an opening, and the first grinding mechanism 6 is positioned in the first holding room 11 adjacent to the first holding room opening, and the second holding room 11 has an opening, and the second grinding mechanism 6 is positioned in the second holding room 11 adjacent to the second holding room opening.

8. The electric seasoning mill as recited in claim 7, wherein each inner rotary member 61 has an interior part having teeth extending outwardly therefrom, and each outer stationary member 62 has an outer part having teeth extending inwardly therefrom; each outer part is positioned around a respective interior part; the teeth extending inwardly from each outer part having a configuration complementary to a configuration of the teeth extending outwardly from a respective interior part.

9. The electric seasoning mill as recited in claim 1, wherein the control switch 4 has a locking ring 43 thereon, which has a protruding wing portion 431; the locking ring 43 being capable of being moved to a first position for the protruding wing portion 431 to cause the control switch 4 and the power source 3 to be in touch with each other so that the first and the second grinding mechanisms 6 can be actuated; the locking ring 43 being capable of being moved to a second position, in which position the protruding wing 431 portion doesn't cause the control switch 4 and the power source 3 to be in touch with each other so that the first and the second grinding mechanisms 6 is prevented from being actuated.

10. An electric seasoning mill, comprising
a main part 1, the main part 1 having first and second ends at two ends, the main part 1 having first and second holding rooms 11 adjacent to the first and the second ends respectively;
a motor 2 installed between the first and the second ends of the main part 1; the motor 2 having a first output shaft 21 projecting towards the first end of the main part 1; the motor 2 having a second output shaft 21' projecting towards the second end of the main part 1; the first and the second output shafts 21 and 21' being capable of rotating in concert in a first direction relative to the main part 1; the first and the second output shafts 21 and 21' being capable of rotating in concert in a second direction relative to the main part 1;
a power source 3 for providing electric power to the motor 2;
a power control switch 4 can be a tilting contact device 4' for controlling electric power to the motor 2; the first and the second output shafts 21 and 21' of the motor 2 being going to rotate in a first direction when the main part 1 is held in such a position that the first holding room 11 is lower than the second holding room 11 thereof; the first and the second output shafts 21 and 21' being going to rotate in a second direction when the main part 1 is held in such a position that the second holding room 11 is lower than the first holding room 11 thereof;
first and second grinding mechanisms 6, the first and the second grinding mechanisms 6 being positioned adjacent to the first and the second holding rooms 11 of the main part 1 respectively; each of the grinding mechanisms 6 including an inner rotary member 61, and an out stationary member 62 positioned around the inner rotary member 61;
a first transmission shaft 5 connected to the first output shaft 21 of the motor 2 and the inner rotary member 61 of the first grinding mechanism 6; and
a second transmission shaft 5 connected to the second output shaft 21' and the inner rotary member 61 of the second grinding mechanism 6.

11. The electric seasoning mill as recited in claim 10, wherein the tilting contact device 4' includes a tunnel 41 with higher and lower portions; the tunnel 41 including a middle lower portion 411, and first and second higher portions 412 and 413 on two sides of the middle lower portion 411; at least one movable rolling member 42 being received in the tunnel 41; first and second contact points 4121 and 4122 being arranged off each other in the first higher portion of the tunnel 41; third and fourth contact points 4131 and 4132 being arranged off each other in the second higher portion of the tunnel 41;
when the main part 1 is tilted such that the first holding room 11 is lower than the second holding room 11 thereof, said at least one movable rolling member 42 being going to move so as to force the first and the second contact points 4121 and 4122 into contact with each other; when the main part 1 is tilted such that the second holding room 11 is lower than the first holding room 11 thereof, said at least one movable rolling member 42 being going to move so as to force the third and the fourth contact points 4131 and 4132 into contact with each other; when the first and the second contact points 4121 and 4122 are in contact with each other, a first circuit being going to be completed, and the first output shaft 21 of the motor 2 being going to rotate in said first direction; when the third and the fourth contact points 4131 and 4132 are in contact with each other, a second circuit being going to be completed, and the second output shaft 21' of the motor 2 being going to rotate in said second direction.

12. The electric seasoning mill as recited in claim 11, wherein a first single-direction ratchet wheel 23 is connected to the first output shaft 21 and the first transmission shaft 5, and a second single-direction ratchet wheel 23 is connected to the second output shaft 21' and the second transmission shaft 5; the first single-direction ratchet wheel 23 being going to rotate the first transmission shaft 5 when the first output shaft 21 is rotating in said first direction; the first single-direction ratchet wheel 23 being not going to rotate the first transmission shaft 5 when the first output shaft 21 is rotating in said second direction; the second single-direction ratchet wheel 23 being going to rotate the second transmission shaft 5 when the second output shaft 21' is rotating in said second direction; the second single-direction ratchet wheel 23 being not going to rotate the second transmission shaft 5 when the second output shaft 21' is rotating in said first direction.

13. The electric seasoning mill as recited in 12, wherein a first reduction gear assembly 22 is connected to the first single-direction ratchet wheel 23 as well as at least one of the first output shaft 21 and the first transmission shaft 5 for decreasing rotation speed of the first transmission shaft 5 relative to rotation speed of the first output shaft 21, and a second reduction gear assembly 22 is connected to the second single-direction ratchet wheel 23 as well as at least one of the second output shaft 21' and the second transmission shaft 5 for decreasing rotation speed of the second transmission shaft 5 relative to rotation speed of the second output shaft 21'.

14. The electric seasoning mill as recited in 10, wherein a first single-direction ratchet wheel 23 is connected to the first output shaft 21 and the first transmission shaft 5, and a second single-direction ratchet wheel 23 is connected to the second output shaft 21' and the second transmission shaft 5; the first single-direction ratchet wheel 23 being going to rotate the first transmission shaft 5 when the first output shaft 21 is rotating in said first direction; the first single-direction ratchet wheel 23 being not going to rotate the first transmission shaft 5 when the first output shaft 21 is rotating in said second direction; the second single-direction ratchet wheel 23 being going to rotate the second transmission shaft 5 when the second output shaft 21' is rotating in said second direction; the second single-direction ratchet wheel 23 being not going to rotate the second transmission shaft 5 when the second output 21' shaft is rotating in said first direction.

15. The electric seasoning mill as recited in 10, wherein a first reduction gear assembly 22 is connected to the first single-direction ratchet wheel 23 as well as at least one of the first output shaft 21 and the first transmission shaft 5 for decreasing rotation speed of the first transmission shaft 5 relative to rotation speed of the first output shaft 21, and a second reduction gear assembly 22 is connected to the second single-direction ratchet wheel 23 as well as at least one of the second output shaft 21' and the second transmission shaft 5 for decreasing rotation speed of the second transmission shaft 5 relative to rotation speed of the second output shaft 21'.

16. An electric seasoning mill, comprising
a main part 1, the main part 1 having first and second ends at two ends, the main part 1 having first and second holding rooms 11 adjacent to the first and the second ends respectively;
a motor 2 positioned between the first and the second ends of the main part 1; the motor 2 having a first output shaft 21 projecting towards the first end of the main part 1; the motor 2 having a second output shaft 21' projecting towards the second end of the main part 1; the first and the second output shafts 21 and 21' being capable of rotating in concert in a first direction relative to the main part 1; the first and the second output shafts 21 and 21' being capable of rotating in concert in a second direction relative to the main part 1;
a power source 3 for providing electric power to the motor 2;
a control switch 4 having a route including a tunnel 41 with higher and lower portions; the tunnel 41 including a middle lower portion 411, and first and second higher portions 412 and 413 on two sides of the middle lower portion 411; at least one movable rolling member 42 being received in the tunnel 41; first and second contact points 4121 and 4122 being arranged in the first higher portion of the tunnel 41; third and fourth contact points 4131 and 4132 being arranged in the second higher portion of the tunnel 41; the first and the second contact points 4121 and 4122 being not in touch with each other; the third and the fourth contact points 4131 and 4132 being not in touch with each other;
first and second grinding mechanisms 6, the first and the second grinding mechanisms 6 being positioned adjacent to the first and the second holding rooms 11 of the main part 1 respectively; each of the grinding mechanisms 6 including an inner rotary member 61, and an out stationary member 62 positioned around the inner rotary member 61;
a first transmission shaft 5 connected to the first output shaft 21 of the motor 2 and the inner rotary member 61 of the first grinding mechanism 6; and
a second transmission shaft 5 connected to the second output shaft 21' and the inner rotary member 61 of the second grinding mechanism 6;
when the main part 1 is tilted such that the first holding room 11 is lower than the second holding room 11 thereof, the movable rolling member 42 being going to be in touch with and connect the first and the second contact points 4121 and 4122; when the main part 1 is tilted such that the second holding room 11 is lower than the first holding room 11 thereof, the movable rolling member 42 being going to be in touch with and connect the third and the fourth contact points 4131 and 4132; when the first and the second contact points 4121 and 4122 are connected, a first circuit being going to be completed, and the first output shaft 21 of the motor 2 being going to rotate in said first direction; when the third and the fourth contact points 4131 and 4132 are connected, a second circuit being going to be completed, and the second output shaft 21' of the motor 2 being going to rotate in said second direction.

17. The electric seasoning mill as recited in claim 16, wherein a first single-direction ratchet wheel 23 is connected to the first output shaft 21 and the first transmission shaft 5, and a second single-direction ratchet wheel 23 is connected to the second output shaft 21' and the second transmission shaft 5; the first single-direction ratchet wheel 23 being going to rotate the first transmission shaft 5 when the first output shaft 21' is rotating in said first direction; the first single-direction ratchet wheel 23 being not going to rotate the first transmission shaft 5 when the first output shaft 21 is rotating in said second direction; the second single-direction ratchet wheel 23 being going to rotate the second transmission shaft 5 when the second output shaft 21' is rotating in said second direction; the second single-direction ratchet wheel 23 being not going to rotate the second transmission shaft 5 when the second output shaft 21' is rotating in said first direction.

18. The electric seasoning mill as recited in claim 17, wherein a first reduction gear assembly 22 is connected to the first single-direction ratchet wheel 23 as well as at least one of the first output shaft 21 and the first transmission shaft 5 for decreasing rotation speed of the first transmission shaft 5 relative to rotation speed of the first output shaft 21, and a second reduction gear assembly 22 is connected to the second single-direction ratchet wheel 23 as well as at least one of the second output shaft 21' and the second transmission shaft 5 for decreasing rotation speed of the second transmission shaft 5 relative to rotation speed of the second output shaft 21'.

19. The electric seasoning mill as recited in claim 16, wherein said at least one movable rolling member 42 has at least one spherical configuration.

20. The electric seasoning mill as recited in claim 16, wherein the control switch 4 has a locking ring 43 thereon, which has a protruding wing portion 431; the locking ring 43 being capable of being moved to a first position for the protruding wing portion 431 thereof to cause the control switch 4 and the power source 3 to be in touch with each other so that the first and the second grinding mechanisms 6 can be actuated; the locking ring 43 being capable of being moved to a second position, in which position the protruding wing portion 431 doesn't cause the control switch 4 and the power source 3 to be in touch with each other so that the first and the second grinding mechanisms 6 is prevented from being actuated.

21. An electric seasoning mill, comprising
a main part 1, the main part 1 having first and second ends at two ends, the main part 1 having first and second holding rooms 11 adjacent to the first and the second ends respectively;
a motor 2 positioned between the first and the second ends of the main part 1; the motor 2 having a first output shaft 21 projecting towards the first end of the main part 1; the motor 2 having a second output shaft 21' projecting towards the second end of the main part 1; the first and the second output shafts 21 and 21' being capable of rotating in concert in a first direction relative to the main part 1; the first and the second output shafts 21 and 21' being capable of rotating in concert in a second direction relative to the main part 1;
a power source 3 for providing electric power to the motor 2;
a control switch 4 having a route including a tunnel 41 with higher and lower portions; the tunnel 41 including a middle lower portion 411, and first and second higher portions 412 and 413 on two sides of the middle lower portion 411; at least one movable conducting member 44 being received in the tunnel 41; first and second contact points 4121 and 4122 being arranged in a parallel manner to each other in the first higher portion 412 of the tunnel 41; third and fourth contact points 4131 and 4132 being arranged in a parallel manner to each other in the second higher portion 413 of the tunnel 411;
first and second grinding mechanisms 6, the first and the second grinding mechanisms 6 being positioned adjacent to the first and the second holding rooms 11 of the main part 1 respectively; each of the grinding mechanisms 6 including an inner rotary member 61, and an out stationary member 62 positioned around the inner rotary member 61;
a first transmission shaft 5 connected to the first output shaft 21 of the motor 2 and the inner rotary member 61 of the first grinding mechanism 6; and
a second transmission shaft 5 connected to the second output shaft 21' and the inner rotary member 61 of the second grinding mechanism 6;
when the main part 1 is tilted such that the first holding room 11 is lower than the second holding room 11 thereof, the movable conducting member 44 being going to be in touch with and electrically connect both the first and the second contact points 4121 and 4122; when the main part 1 is tilted such that the second holding room 11 is lower than the first holding room 11 thereof, the movable conducting member 44 being going to be in touch with and electrically connect both the third and the fourth contact points 4131 and 4132; when the first and the second contact points 4121 and 4122 are electrically connected, a first circuit being going to be completed, and the first output shaft 21 of the motor 2 being going to rotate in said first direction; when the third and the fourth contact points 4131 and 4132 are electrically connected, a second circuit being going to be completed, and the second output shaft 21' of the motor 2 being going to rotate in said second direction.

22. The electric seasoning mill as recited in claim 21, wherein the movable conducting member 44 is a rolling bead.

23. The electric seasoning mill as recited in claim 21, wherein the movable conducting member 44 includes a rolling bead, and elastic elements 45 on two ends of the rolling bead.

24. The electric seasoning mill as recited in claim 23, wherein the rolling bead is a non-conductor.
